(19) Europäisches Patentamt
European Patent Office
Office européen des brevets

(11) Veröffentlichungsnummer: **0 205 604**
**B1**

(12) # EUROPÄISCHE PATENTSCHRIFT

(45) Veröffentlichungstag der Patentschrift: **19.04.89**

(51) Int. Cl.⁴: **C 09 B 67/00**, C 08 J 3/22, C 08 K 9/10, C 08 K 5/23

(21) Anmeldenummer: **86900660.1**

(22) Anmeldetag: **12.12.85**

(86) Internationale Anmeldenummer: **PCT/EP 85/00699**

(87) Internationale Veröffentlichungsnummer: **WO 86/03762 (03.07.86 Gazette 86/14)**

(54) **PULVER-AZOPIGMENTE MIT VERBESSERTEN RHEOLOGISCHEN EIGENSCHAFTEN UND VERFAHREN ZU IHRER HERSTELLUNG UND IHRE VERWENDUNG.**

(30) Priorität: **18.12.84 DE 3446088**
**18.12.84 DE 3446044**

(43) Veröffentlichungstag der Anmeldung: **30.12.86 Patentblatt 86/52**

(45) Bekanntmachung des Hinweises auf die Patenterteilung: **19.04.89 Patentblatt 89/16**

(84) Benannte Vertragsstaaten: **CH DE FR GB IT LI NL**

(56) Entgegenhaltungen:
**EP-A-0 074 080**
**EP-A-0 154 678**

(73) Patentinhaber: **HOECHST AKTIENGESELLSCHAFT, Postfach 80 03 20, D-6230 Frankfurt am Main 80 (DE)**

(72) Erfinder: **RIEPER, Wolfgang, Sternstrasse 11, D-6000 Frankfurt am Main 1 (DE)**
Erfinder: **HAFNER, Otmar, Zum Talblick 27, D-6246 Glashütten/Taunus (DE)**

**EP 0 205 604 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft Pulver-Azopigmente, die mit 1 - 20 Gew.-%, bezogen auf die nicht geschichteten Pulver-Azopigmente, der Wirksubstanz eines Additivs der Polyurethanreihe beschichtet sind, mit verbesserten rheologischen Eigenschaften für die Verwendung in herkömmlichen und modernen Lacksystemen vom Typ der "high solids", sowie ein Verfahren zu ihrer Herstellung.

Bei der Dispergierung organischer Pigmente in Lacksystemen muß angestrebt werden, daß eine optimale Stabilisierung der Pigmentteilchen mit den Bindemitteln des Lacksystems erreicht wird. Für den Grad dieser Stabilisierung ist neben der chemischen Konstitution und der physikalischen Beschaffenheit der Pigmente die Dispergiermethode und vor allem die Bindemittelart und die Lösemittelmenge des Lacksystems entscheidend. Mangelhafte Stabilisierung führt neben der Verschlechterung des coloristischen Bildes zu Glanz-, Viskositäts- und Flockulationsproblemen. Zur Verbesserung dieses Verhaltens der Pigmente sind eine Reihe von Maßnahmen bekannt, die alle in herkömmlichen Lacksystemen zu einer deutlichen Minderung der Probleme führen.

Als Beispiele hierfür seien folgende genannt:

Die Präparierung von Pigmenten mit oberflächenaktiven Substanzen, beispielsweise Harzseifen, Alkylphenolpolyglykolethersulfonaten (DE-PS-2 152 485) oder quaternären Ammoniumverbindungen (DE-OS-3 338 806). Außerdem sind Additive bekannt, welche bei der Lackkonditionierung zugesetzt werden, um eine Flockung der Pigmente im Lack zu verhindern und eine Verbesserung des rheologischen Verhaltens zu bewirken, wie etwa höhermolekulare Harnstoffderivate (DE-AS-2 906 111).

Neuere Entwicklungen auf dem Lackgebiet mit dem Ziel drastischer Verringerung der Lösemittelmenge und deutlicher Verkleinerung der Bindemittelmoleküle, wie beispielsweise in Richtung "TSA-NAD" (thermosetting acrylic-non aqueous dispersion) und "high solids" (Lacksysteme mit einem Bindemittelanteil von mehr als 50 % bei der Verarbeitung) führten zu erheblichen Schwierigkeiten, eine perfekte Stabilisierung der Pigmente in diesen Lacksystemen zu erreichen. Aus diesem Grund wurden spezielle Additive entwickelt, die entweder

1. durch gemeinsame mechanische Dispergierung mit den Pigmenten in Lösemitteln und anschließend Kombination mit dem Lack das Problem lösen sollen oder
2. der Lack/Pigment-Mischung vor der mechanischen Dispergierung zugesetzt werden.

Der erstgenannte Weg wird beispielsweise in den Patentschriften US-PS-4 029 861, 4 032 698, 4 048 207 und 4 070 388 beschrieben. Hierbei wird das Pigment mit den polymeren Wirksubstanzen, die in organischen Lösemitteln gelöst vorliegen, im Lacklösemittel einer Vordispergierung unterworfen, wobei bis zu 50 % Wirksubstanz, bezogen auf das eingesetzte Pigment, zur Anwendung gelangen. Die so erhaltene Pigmentdispersion wird dann dem Lackbindemittelsystem zur Pigmentierung zugesetzt.

Die beschriebenen, zur Dispergierung eingesetzten polymeren Materialien werden durch Verknüpfung von polymeren Lackbausteinen über mindestens bifunktionelle Isocyanate der aliphatischen und aromatischen Reihe mit organischen Verbindungen, die saure, basische oder Silan-Endgruppen tragen, hergestellt. Dabei kann die Verknüpfung sowohl über Urethan- als auch über Harnstoffgruppierungen erfolgen.

Auch für den zweiten obengenannten Weg zur Stabilisierung von Pigment/Lack-Dispersion wurden geeignete Hilfsmittel bekannt, die den pigmentierten Lacken nachträglich zugesetzt werden.

In der EP-OS-0 154 678 [Stand der Technik nach Artikel 54 (3) EPÜ] werden als Dispergiermittel Additionsverbindungen vorgeschlagen, die man durch folgende Reaktionsfolge erhält:

Umsetzung von Polyisocyanaten mit einer mittleren Funktionalität von 2,5 bis 6 mit Monohydroxyverbindungen, Umsetzung des erhaltenen Reaktionsprodukts mit Verbindungen der Formel

$$G\text{-}(E)_n$$

worin

E für -OH, $-NH_2$ und/oder -NHR (worin R eine Alkylgruppe mit 1 bis 4 Kohlenstoffatomen darstellt) und

n für 2 oder 3 stehen, und

G eine aliphatische, cycloaliphatische und/oder aromatische Gruppe darstellt,

und weitere Umsetzung des so erhaltenen Reaktionsproduktes mit Verbindungen der Formel

$$Z\text{-}Q$$

worin

Q für -OH, $-NH_2$, -NHR (wobei R für eine Alkylgruppe mit 1 bis 4 Kohlenstoffatomen steht) oder -SH steht und

Z eine Gruppe bedeutet, die mindestens eine stickstoffhaltige basische Gruppe enthält.

Als Nachteil der genannten bekannten Methoden erweist sich das Fehlen einer universellen Arbeitsweise, d.h. Art und Menge des Additivs müssen für das jeweilige Pigment und Bindemittelsystem empirisch ermittelt werden. Außerdem bringt der etwa bei handelsüblichen Lackadditiven empfohlene hohe Anteil an Zusätzen (bis zu 20 % bei der Lackkonditionierung) den Nachteil einer notwendigen Erhöhung des Lösemittelanteils im Lacksystem mit sich. Gerade dies läuft dem Bestreben einer Reduzierung der Lösemittelmenge im Lack entgegen. Ferner wurden Unverträglichkeiten bereits oberflächenbehandelter Pigmente bei der Lackherstellung in Kombination mit den beschriebenen Additiven beobachtet.

Somit bestand der Bedarf, Pulverpigmente einer Qualität zu entwickeln, bei denen für die Erreichung optimaler rheologischer Eigenschaften, vor allem auch in modernen Lacksystemen, wie "TSA-NAD" und "high solids", bei der Lackkonditionierung keine weiteren Additive mehr benötigt werden.

Es wurde nun gefunden, daß es gelingt, Pulver-Azopigmente, ausgenommen C.I. Pigment Orange 36 (C.I. No. 11 780), mit verbesserten rheologischen Eigenschaften für die Verwendung in konventionellen Lacksystemen oder modernen Lacksystemen vom Typ "high solids" auf Basis Alkyd/Melamin, Acryl/Melamin, Acrylat/Isocyanat oder Polyester/Isocyanat, herzustellen, indem man die Basis-Azopigmente während der Pigmentformierung - ggfs. vor, während oder nach dem Finish - mit 1 - 20 Gew.-%, bezogen auf die nicht beschichteten Pulver-Azopigmente, der Wirksubstanz von Additiven beschichtet, die erhalten werden, wenn man Polyisocyanurate, die noch freie Isocyanatgruppen enthalten auf Basis Toluylendiisocyanat oder Hexamethylendiisocyanat oder deren Gemische mit folgenden Verbindungen nacheinander bzw. mit einem Gemisch aus ihnen umsetzt bis keine Isocyanatgruppen mehr nachweisbar sind:

1. Aliphatischen Mono- oder polykondensierten Hydroxycarbonsäurealkyl $C_1$-$C_{20}$-estern (Polykondensationsgrad 2 - 50), wie z. B. der Polyester aus 1 Mol Decanol und 7 Mol ε-Caprolacton.
2. Polyethylenglykolen (Molgewicht 500 - 1500) und
3. 5- oder 6-gliedrigen gesättigten oder ungesättigten Heterocyclen, die mindestens ein Stickstoffatom im Ringsystem haben und eine Gruppe tragen, die mit Isocyanaten reagieren kann und mit der allgemeinen Formel

$$H\text{-}R_1\text{-}R_2\text{-}R_3 \quad (1)$$

zusammengefaßt werden können.

In dieser Formel steht
$R_1$ für -O- oder -NH-, $R_2$ für eine Alkylengruppe mit 1 - 6 Kohlenstoffatomen, und
$R_3$ für ein 5- oder 6-gliedriges, gesättigtes oder ungesättigtes, Stickstoffatome enthaltendes heterocyclisches Ringsystem.

Beispiele für Verbindungen der genannten Formel (I) sind

1-(2-Hydroxyethyl)-pyrrolidin, 2-(1-Pyrrolidyl)-ethylamin, 1-(2-Hydroxyethyl)-piperidin, 2-(1-Piperidyl)-ethylamin, 1-(2-Aminopropyl)-piperidin, 4-(2-Hydroxyethyl)-morpholin, 2-(4-Morpholinyl)-ethylamin, 4-(3-Aminopropyl)-morpholin, 1-(2-Hydroxyethyl)-piperazin, 1-(2-Aminoethyl)-piperazin, 1-(2-Hydroxyethyl)-2-alkyl-imidazoline, 1-(3-Aminopropyl)-imidazol, 1-(3-Hydroxypropyl)-imidazol, (2-Aminoethyl)-pyridin, (2-Hydroxyethyl)-pyridin, (3-Hydroxypropyl)-pyridin, (2-Hydroxymethyl)-pyridin und N-Methyl-2-hydroxymethyl-piperidin.

Die Umsetzungen werden in bekannter Weise, etwa wie in der US-PS-4 032 698 oder in der EP-OS-0 154 678 beschrieben, in inerten Lösemitteln, beispielsweise Kohlenwasserstoffen, Ethern, Estern, Ketonen oder Säureamiden durchgeführt.

Die vorliegende Erfindung betrifft Pulver-Azopigmente mit verbesserten rheologischen Eigenschaften für die Verwendung in Lacksystemen auf Basis Alkyd/Melamin, Acryl/Melamin, Acrylat/Isocyanat oder Polyester/Isocyanat sowohl konventioneller Art als auch moderner Art vom Typ der "high solids", auf welche - ggfs. vor, während oder nach dem Finish - 1 bis 20 Gew.-%, bezogen auf das Pigment, der Wirksubstanz der erfindungsgemäßen Additive aufgebracht wurden sowie das Verfahren zur Herstellung der beschichteten Azopigmente.

Es war nicht zu erwarten, daß das Ergebnis der Erfindung bei Abwesenheit von Lackbindemitteln ohne Anwendung von mechanischen Scherkräften, wie beim Additivzusatz im Lack, erzielt werden kann, was aber nicht ausschließt, daß man die Pigmentsuspension - ggfs. vor, während oder nach dem Finish - bei der Präparierung Scherkraften aussetzt.

Es war ferner nicht zu erwarten, daß es gelingt, den gleichen maximalen Effekt bei der Applizierung des Urethanharzes in der Pigmentsuspension - ggfs, vor, während oder nach dem Finish - zu erreichen, da Harzteile, die nicht an der Pigmentoberfläche fixiert sind, bei der Trocknung des Pigmentpulvers als gröbere Anteile vorliegen, die bei der Lackkonditionierung bekanntlich nur sehr schwer in Lösung gehen und den gewünschten Effekt stören würden, wie es in der Tat bei rein mechanischen Mischungen auftritt. Außerdem war nicht zu erwarten, daß durch geeignetes Aufbringen des Additivs auf die Oberfläche des bei der Herstellung optimal verteilten Pigments in der Suspension die Menge des Additivs gegenüber dem Einsatz bei der Lackkonditionierung drastisch verringert und der optimale Effekt erreicht werden kann.

Vor allem war überraschend, daß sich auch Azopigmente zur Beschichtung mit der Wirksubstanz der beschriebenen Additive eignen. Wie bereits erwähnt, werden bei den oben aufgeführten bekannten Methoden zur Stabilisierung von Pigment-Lack-Dispersionen bzw. zur Verbesserung der rheologischen Eigenschaften (DE-PS-2 152 485, DE-AS-2 906 111, DE-OS-3 338 806, US-PS-4 029 861, US-PS-4 032 698, US-PS-4 048 207, US-PS-4 070 388, EP-OS-0 154 678) anorganische Pigmente, Pigmente der Anthrachinon-, Phthalocyanin-, Chinacridon-Reihe u.a. chemischer Klassen beschrieben, jedoch wird in keinem Fall die Behandlung eines Azopigmentes erwähnt.

Bei den literaturbekannten Verfahren zur Verbesserung der rheologischen Eigenschaften von Azopigmenten in Lackdispersionen wird der Effekt dagegen durch eine gezielte Veränderung der physikalischen Parameter, wie Vergrößerung des Pigmentkorns und Veränderung der Korngrößenverteilung, erreicht (z. B. DE-PS-2 302 482 und DE-AS-2 302 509); diese hat jedoch eine

starke Veränderung der coloristischen Eigenschaften, vor allem eine Abnahme der Farbstärke zur Folge.

Das Aufbringen des Lackadditivs auf die Azopigmentoberfläche kann auf verschiedene Weise erfolgen: Durch Zusatz zur wäßrigen Pigmentsuspension, zur Pigmentsuspension im Wasser-Lösemittel-Gemisch oder zur Pigmentsuspension in organischen Lösemitteln - ggfs. vor, während oder nach einem Pigmentfinish.

Der Zusatz des Additivs zur wäßrigen Pigmentsuspension kann in solchen Lösemitteln erfolgen, die mit Wasser mindestens teilweise mischbar sind, wie aliphatische Alkohole mit 1 bis 3 C-Atomen, wie beispielsweise Ethanol oder Propanol; Glykole, Glykolether und Glykolester, wie beispielsweise Ethylenglykol, Diethylenglykol, Propylenglykol, Glykolmonoethyl-$C_1$-$C_6$-ether, Diglykolmonoalkyl-$C_1$-$C_4$-ether, Diglykoldimethylether, Ethylglykolacetat, Methylglykolacetat, Butyldiglykolacetat; Ketone der allgemeinen Formel

Alkyl-$C_1$-$C_4$-C-Alkyl-$C_1$-$C_4$,
||
O

wie beispielsweise Aceton, Methylethylketon, Methyl-isobutylketon oder Diacetonalkohol (4-Methyl-4-hydroxy-pentanon-(2)); aliphatische Carbonsäuren von 1 - 4 Kohlenstoffatomen, wie beispielsweise Ameisensäure-, Essig- oder Propionsäure, aliphatische Carbonsäureamide von 1 - 5 Kohlenstoffatomen, wie beispielsweise Dimethylformamid; cyclische Carbonsäureamide, wie beispielsweise N-Methylpyrrolidon.

In Verbindung mit einem Lösemittelfinish eines Azopigments - etwa einer thermischen Nachbehandlung des Pigments zur Erhöhung der Deckkraft oder zur Verbesserung der anwendungstechnischen Eigenschaften - erfolgt die Zugabe des Additivs zweckmäßigerweise in dem Lösemittel, in dem die thermische Nachbehandlung des Pigments durchgeführt wird.

Als besonders geeignete Lösemittel haben sich dabei solche erwiesen, die in Wasser nicht oder nicht unbegrenzt löslich sind, wie aromatische Kohlenwasserstoffe, beispielsweise Toluol oder Xylole; halogenierte Aromaten, beispielsweise Chlorbenzol oder o-Dichlorbenzol; Nitroaromaten, beispielsweise Nitrobenzol; höhere Alkohole mit 4 - 6 C-Atomen, wie beispielsweise Isobutanol, oder Ester aromatischer Säuren, beispielsweise Benzoesäuremethyl- oder -ethylester sowie aromatische Ether, wie Anisol oder Phenetol.

Die Zugabe des Additivs bzw. seiner Lösung in einem der genannten Lösemittel kann dabei vor oder nach dem Finish erfolgen. Durch anschließende Wasserdampfdestillation läßt sich das eingesetzte Lösemittel rasch und quantitativ aus der Suspension abtreiben und das Additiv besonders einfach und mit hohem Wirkungsgrad auf die Oberfläche des Pigments aufbringen. Das so präparierte Azopigment kann aus der zurückbleibenden wäßrigen Suspension in üblicher Weise isoliert werden.

Das Aufbringen der Wirksubstanz in einem der genannten Lösemittel kann auch ohne vorausgegangene oder nachfolgende thermische Behandlung (Finish) des Pigments erfolgen, indem unmittelbar nach Zugabe der Additivlösung zur wäßrigen Pigmentsuspension unter intensivem Rühren das verwendete Lösemittel etwa mit Wasserdampf wieder abdestilliert wird.

Häufig ist das Additiv in einem der genannten Lösemittel nicht verfügbar, d.h. die Wirksubstanz des Additivs liegt - bedingt durch dessen Synthese - in einem anderen Lösemittel oder in einem Lösemittelgemisch vor. Zur Überführung der Wirksubstanz in eine für die Präparierung des jeweiligen Azopigments geeignete Form können folgende Methoden dienen:

1. Ausfällen der Wirksubstanz aus der Additivlösung etwa durch Zusatz aliphatischer Kohlenwasserstoffe, beispielsweise Hexan, Abtrennen durch Filtration, ggfs. Trocknen bei relativ niedrigen Temperaturen und Lösen der isolierten Wirksubstanz in einem der gewünschten Lösemittel.
2. Abdestillieren des Additiv-Lösemittels im Vakuum und Aufnehmen der zurückbleibenden Wirksubstanz in einem für die Präparierung des Pigments geeigneten Lösemittel.
3. Zusatz eines höher siedenden Lösemittels zur Additivlösung und anschließendes Abdestillieren des niedriger siedenden Lösemittels, in dem der Wirkstoff gelöst war, ggfs. bei reduziertem Druck und/oder unter Zusatz von Wasser zur Bildung eines tiefer siedenden Azeotrops. Als höher siedende, für die Präparierung des Pigments geeignete Lösemittel haben sich vor allem aliphatische Carbonsäuren, Glykole und Glykolacetate bewährt.

Die Verwendung von organischen Carbonsäuren empfiehlt sich besonders in Fällen, bei denen das Additiv schwach basischen Charakter hat. In diesen Fallen kann es dann von Vorteil sein, nach der Präparierung die organische Säure zu neutralisieren bzw. die Pigmentsuspension schwach alkalisch zu stellen. Additive mit schwach basischem Charakter können auch in verdünnten wäßrigen, schwach sauren, vorzugsweise essigsauren Lösungen eingesetzt werden.

Wenn das Additiv basischen Charakter hat, kann es weiterhin von Vorteil sein, mit äquivalenten Mengen anionischer Hilfsmittel, wie beispielsweise Alkylphenolpolyglykoläthersulfaten, Harzseifen oder Sulfobernsteinsäureestern zu neutralisieren.

Der Zusatz dieser Hilfsmittel kann jeweils vor, während oder nach dem Finish erfolgen. Es ist aber nicht erforderlich, Additiv und Hilfsmittel in der gleichen Stufe der Pigmentformierung zuzusetzen.

Die erfindungsgemäß präparierten Pulver-Azopigmente zeigen in allen Lacksystemen, besonders in den üblicherweise schwer pigmentierbaren Systemen, wie "TSA-NAD" und "high solids", hervorragende rheologische Eigenschaften.

Gegenüber den unbehandelten Vergleichspigmenten zeichnen sie sich in den entsprechenden Lacksystemen durch deutlich verbessertes Glanz-, Viskositäts- und Flockulationsverhalten, häufig auch durch höhere Farbstärke aus.

Das erfindungsgemäße Verfahren zur Herstellung der Pulver-Azopigmente mit verbesserten rheologischen Eigenschaften wird durch nachfolgende Beispiele näher erläutert. Die dabei angegebenen Teil- und Prozentangaben beziehen sich auf das Gewicht.

**Beispiele 1**

In einem Rührgefäß werden 31,5 Teile einer 50-%-igen Lösung eines Polyisocyanurates der idealisierten Struktur der nachstehenden Formel

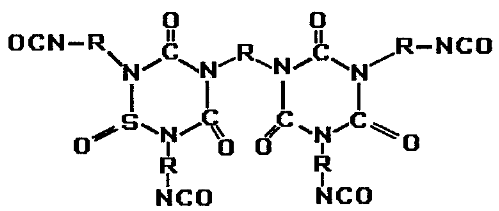

in welcher R den Toluylenrest bedeutet, 31,5 Teile Ethylglykolacetat sowie 0,04 Teile Dibutylzinndilaurat vorgelegt und auf 50°C erwärmt. 19,1 Teile eines Polyesters aus 1 Mol Decanol und 7 Mol ε-Caprolacton, gelöst in 19,1 Teilen Ethylbenzol, werden rasch zugegeben und 1 Stunde bei 80°C gerührt. Der NCO-Gehalt verringert sich dabei von 2,4 % zu Beginn der ersten Teilreaktion auf 1,6 %.

In einem zweiten Reaktionsgefäß werden 8 Teile eines Polyethylenglykols (mittleres Molgewicht 1000) und 3,75 Teile N-(3-Aminopropyl)-imidazol in 73,5 Teilen Xylol bei 50°C gelöst. Innerhalb von 30 Minuten wird das Reaktionsprodukt der ersten Reaktionsstufe zugetropft und der Ansatz noch 2 Stunden bei 80°C gerührt. Man erhält ein fast klares, farbloses, niedrigviskoses Produkt mit einem Feststoffgehalt von 25 %, das im IR-Spektrum keine NCO-Bande mehr aufweist. Mittleres Molgewicht des Feststoffes: 6300.

**Beispiel 2**

100 Teile eines 34,5-%-igen wäßrigen Preßkuchens von C.I. Pigment Red 188 (CAS-Nr. 61847-48-1) werden in 315 Teilen E-Wasser verrührt und der hierbei erhaltenen Pigmentsuspension 160 Teile Chlorbenzol zugesetzt, in welchem 7 Teile des nach Beispiel 1 erhaltenen Additivs gelöst worden waren.

Unter intensivem Rühren wird die Suspension auf 90°C erhitzt und 1 Stunde bei dieser Temperatur gehalten. Anschließend wird das organische Lösemittel durch Einleiten von Wasserdampf abdestilliert und das Pigment aus der zurückbleibenden wäßrigen Suspension abfiltriert. Nach dem Trocknen bei 60 - 70°C und Mahlen erhält man 35,3 Teile präpariertes Pigmentpulver. Die damit hergestellten Volltonlackierungen zeichnen sich durch sehr gute rheologische Eigenschaften und hervorragenden Glanz aus.

Wiederholt man zum Vergleich die beschriebene Behandlung des C.I. Pigment Red 188 im Chlorbenzol-Wasser-Gemisch ohne Zusatz des Additivs, so erhält man 34 Teile des Azopigments, dessen Volltonlackierungen einen deutlichen Glanzschleier aufweisen.

Zum Vergleich der Glanzwerte wurden die im Ofen eingebrannten Volltonfolienaufgüsse von unter gleichen Bedingungen hergestellten 7-%-igen "TSA-NAS"-Lacken, die vor dem Aufguß auf eine Viskosität von 20 Sekunden (gemessen im Fordbecher ø 4 mm) mit Lacklösemitteln eingestellt worden waren, mit dem Glanzmessgerät Hunterlab D48D unter einem Winkel von 20° gemessen, wobei folgende Glanzwerte abgelesen wurden:

Präpariertes Azopigment: 88
Vergleichspigment: 36.

**Beispiel 3**

100 Teile C.I. Pigment Red 188 werden in Form eines 34,5-%-igen Preßkuchens in einem Gemisch von 315 Teilen Wasser und 160 Teilen Chlorbenzol unter Rühren 1 Stunde auf 90°C erhitzt. Danach setzt man der Mischung 100 Teile einer 2-%-igen (bezogen auf Wirksubstanz) wäßrigen, schwach essigsauren Lösung des Additivs zu, die nach folgendem Verfahren enthalten worden war:

Durch Zugabe der 1,5- bis 2-fachen Menge n-Hexan zu dem gemäß Beispiel 1 hergestellten Additiv wurde dessen Wirksubstanz ausgefällt. 2 Teile des isolierten Urethanharzes wurden in 10 Teilen Essigsäure gelöst und die Lösung mit Wasser auf 100 Teile verdünnt.

Aus der mit der Additivlösung versetzten Pigmentsuspension wird anschließend durch Einleiten eines Wasserdampfstromes das organische Lösemittel abdestilliert. Nach Absaugen der wäßrigen Suspension und Trocknen des feuchten Preßkuchens erhält man 35,8 Teile des präparierten Azopigments, dessen Volltonlackierung wiederum hohe Glanzwirkung zeigen.

Glanzwert: 82,5.

**Beispiel 4**

14 Teile des gemäß Beispiel 1 erhaltenen Additivs werden unter reduziertem Druck von den flüchtigen Anteilen befreit. Das zurückbleibende Harz wird bei etwa 75°C in 115 Teilen Isobutanol gelöst. Die Isobutanol-Lösung der Additiv-Wirksubstanz wird anschließend unter Rühren bei 75 - 80°C mit der Suspension von 36 Teilen des Kupplungsprodukts von diazotiertem o-Trifluormethyl-anilin auf 5-Acetoacetylaminobenzimidazolon C.I. Pigment Yellow 154 (CAS Nr. 68134-22-5) in 450 Teilen Wasser vermischt. Man erwärmt die Pigmentsuspension unter Rühren auf 88°C, hält 1 Stunde bei dieser Temperatur und destilliert anschließend das organische Lösemittel durch Einleiten von Wasserdampf ab. Nach Filtration des Pigments aus der wäßrigen Suspension, Trocknen bei 60 - 70°C und Mahlen erhält man 38,4 Teile präpariertes Pulver-Azopigment.

Im Gegensatz zu dem in analoger Weise, jedoch ohne Additiv-Zusatz behandelten Vergleichspigment weist das präparierte Pigmentpulver im Vollton (7-%-iger TSA-NAD-Lack) hervorragenden Glanz auf, entsprechend starken Meßwertunterschieden bei der in Beispiel 2 beschriebenen Glanzmessung:

Präpariertes Azopigment: 82
Vergleichspigment: 20.

**Patentansprüche**

1. Pulver-Azopigmente, ausgenommen C. I. Pigment Orange 36 (C. I. No. 11780) mit verbesserten rheologischen Eigenschaften für die Verwendung in Lacksystemen auf Basis Alkyd/Melamin, Acryl/Melamin, Acrylat/Isocyanat oder Polyester/Isocyanat sowohl konventioneller Art als auch moderner Art vom Typ der "high solids", dadurch gekennzeichnet, daß auf diese - ggfs. vor, während oder nach einem Finish - 1 bis 20 Gew.-%, bezogen auf die nicht beschichteten Pulver-Azopigmente, der Wirksubstanz eines Lackadditivs der Polyurethanreihe, hergestellt durch Umsetzung von Polyisocyanuraten, die noch freie Isocyanatgruppen tragen, auf Basis von Toluylendiisocyanat, Hexamethylendiisocyanat oder deren Gemische mit (1) aliphatischen Mono- oder Polyhydroxycarbonsäurealkyl-$C_1$-$C_{20}$-estern (Polykondensationsgrad 2 - 50), (2) Polyethylenglykolen (Molgewicht 500 - 1500) und (3) 5- oder 6-gliedrigen, gesättigten oder ungesättigten Heterocyclen, die mindestens 1 Stickstoffatom im Ring enthalten und reaktionsfähige Amino- oder Hydroxyalkyl-$C_1$-$C_6$-gruppen enthalten, bis keine Isocyanatgruppen mehr nachweisbar sind, aufgebracht wurde(n).

2. Verfahren zur Herstellung von Pulver-Azopigmenten, ausgenommen C.I. Pigment Orange 36 (C.I. No. 11 780) mit verbesserten rheologischen Eigenschaften für die Verwendung in Lacksystemen auf Basis Alkyd/Melamin, Acryl/Melamin, Acrylat/Isocyanat oder Polyester/Isocyanat sowohl konventioneller Art als auch moderner Art vom Typ der "high solids", dadurch gekennzeichnet, daß man die Basispigmente - ggfs. vor, während oder nach dem Finish - mit 1 bis 20 Gew.-% der Wirksubstanz eines Lackadditivs der Polyurethanreihe, hergestellt durch Umsetzung von Polyisocyanaten, die noch freie Isocyanatgruppen tragen auf Basis von Toluylendiisocyanat, Hexamethylendiisocyanat oder deren Gemischen mit (1) aliphatischen Mono- oder Polyhydroxycarbonsäurealkyl-$C_1$-$C_{20}$-estern (Polykondensationsgrad 2 - 50), (2) Polyethylenglykolen (Molgewicht 500 - 1500) und (3) 5- oder 6-gliedrigen, gesättigten oder ungesättigten Heterocyclen, die mindestens 1 Stickstoffatom im Ring enthalten und noch reaktionsfähige Amino- oder Hydroxyalkyl-$C_1$-$C_5$-Gruppen tragen, bis keine Isocyanatgruppen mehr nachweisbar sind, behandelt.

3. Verfahren nach Anspruch 2, dadurch gekennzeichnet, daß die Wirksubstanz eines Lackadditivs der Polyurethanreihe in einem Lösemittel eingesetzt wird, das in Wasser nicht oder nicht unbegrenzt löslich ist.

4. Verfahren nach Anspruch 3, dadurch gekennzeichnet, daß die Wirksubstanz eines Lackadditivs der Polyurethanreihe gelöst in einem aliphatischen Alkohol von 4 - 6 Kohlenstoffatomen, einem aromatischen Kohlenwasserstoff, halogenierten Aromaten, Nitroaromaten, einem Ester aromatischer Säuren oder einem aromatischen Ether eingesetzt wird.

5. Verfahren nach Anspruch 2, dadurch gekennzeichnet, daß die Wirksubstanz eines Lackadditivs der Polyurethanreihe, gelöst in einem organischen Lösemittel, das mindestens teilweise in Wasser mischbar ist, verwendet wird.

6. Verfahren nach Anspruch 5, dadurch gekennzeichnet, daß die Wirksubstanz eines Lackadditivs der Polyurethanreihe, gelöst in Ethanol, Propanol, Ethylenglykol, Diethylenglykol, Propylenglykol, Glykolmonoalkyl-$C_1$-$C_6$-äther, Diglykolmonoalkyl-$C_1$-$C_4$-äther, Diglykoldimethyläther, Ethylglykolacetat, Methylglykolacetat, Butyldiglykolacetat, Aceton, Methylethylketon, Methylisobutylketon, Diacetonalkohol, Ameisensäure, Essigsäure, Propionsäure, Dimethylformamid oder N-Methylpyrrolidon verwendet wird.

7. Verfahren nach Anspruch 2, dadurch gekennzeichnet, daß eine schwach basische Wirksubstanz eines Lackadditivs der Polyurethanreihe in verdünnter, wäßriger, schwach saurer, vorzugsweise essigsaurer Lösung eingesetzt wird.

8. Verwendung der in Anspruch 1 beschriebenen Pulver-Azopigmente zum Pigmentieren von Lacksystemen.

**Claims**

1. A powdered azo pigment with the exception of C.I pigment orange 36 (C.I. No. 11780) with improved rheological properties for use in a paint system on an alkyd/melamine, acrylic/melamine, acrylate/isocyanate or polyester/isocyanate basis both of a conventional nature and of a modern nature of the "high solids" type, to which - as appropriate before, during or after finishing - 1 to

20 % by weight, relative to the uncoated powdered azo pigment, of the active substance of a paint additive of the polyurethane series, prepared by reacting polyisocyanurates which still carry free isocyanate groups and are based on toluylene diisocyanate, hexamethylenediisocyanate or mixtures thereof, with (1) aliphatic mono- or polyhydroxycarboxylic acid $C_1$-$C_{20}$-alkyl esters (degree of polycondensation 2 - 50), (2) polyethylene glycols (molecular weight 500 - 1,500) and (3) 5- or 6membered, saturated or unsaturated heterocyclic compounds which contain at least one nitrogen atom in the ring and contain reactive amino or hydroxy$C_1$-$C_6$-alkyl groups, until isocyanate groups are no longer detectable, has/have been applied.

2. A process for the preparation of a powdered azo pigment with the exception of C.I. pigment orange 36 (C.I. No. 11780) with improved rheological properties for use in a paint system on an alkyd/melamine, acrylic/melamine, acrylate/isocyanate or polyester/isocyanate basis both of a conventional nature and of a modern nature of the "high solids" type, which comprises treating the base pigment - as appropriate before, during or after finishing - with 1 to 20 % by weight of the active substance of a paint additive of the polyurethane series prepared by reacting polyisocyanates which still carry free isocyanate groups and are based on toluylene diisocyanate, hexamethylene diisocyanate or mixtures thereof with (1) aliphatic mono-or polyhydroxycarboxylic acid $C_1$-$C_{20}$-alkyl esters (degree of polycondensation 2 - 50), (2) polyethylene glycols (molecular weight 500 - 1,500) and (3) 5- or 6-membered, saturated or unsaturated heterocyclic compounds which contain at least 1 nitrogen atom in the ring and still carry reactive amino or hydroxy-$C_1$-$C_6$-alkyl groups, until isocyanate groups are no longer detectable.

3. The process as claimed in claim 2, wherein the active substance of a paint additive of the polyurethane series is used in a solvent which is insoluble or not infinitely soluble in water.

4. The process as claimed in claim 3, wherein the active substance of a paint additive of the polyurethane series is used in solution in an aliphatic alcohol of 4 - 6 carbon atoms, an aromatic hydrocarbon, halogenated aromatics, nitroaromatics, an ester of aromatic acids or an aromatic ether.

5. The process as claimed in claim 2, wherein the active substance of a paint additive of the polyurethane series is used in solution in an organic solvent which is at least partially water-miscible.

6. The process as claimed in claim 5, wherein the active substance of a paint additive of the polyurethane series is used in solution in ethanol, propanol, ethylene glycol, diethylene glycol, propylene glycol, a glycol mono-$C_1$-$C_6$-alkyl ether, a diglycol mono-$C_1$-$C_4$-alkyl ether, diglycol dimethyl ether, ethylglycol acetate, methylglycol acetate, butyldiglycol acetate, acetone, methyl ethyl ketone, methyl isobutyl ketone, diacetone alcohol, formic acid, acetic acid, propionic acid, dimethylformamide or N-methylpyrrolidone.

7. The process as claimed in claim 2, wherein a weakly basic active substance of a paint additive of the polyurethane series is employed in dilute, aqueous, weakly acid, preferably acetic acid, solution.

8. The use of the powdered azo pigment described in claim 1 for pigmenting a paint system.



**Revendications**

1. Pigments azoïques pulvérulents, à l'exclusion du pigment orange C.I. Pigment orange 36 (C.I. n° 11 780), ayant de meilleures propriétés rhéologiques pour servir dans des compositions pour peintures et vernis à base d'alkyde/mélamine, acrylique/mélamine, acrylate/isocyanate ou polyester/isocyanate, de nature traditionnelle aussi bien que de nature moderne du type des "high solids" [à teneur élevée en des solides], pigments caractérisés en ce qu'on leur a appliqué, éventuellement avant, pendant ou après un finissage, 1 à 20 % en poids, sur la base des pigments azoïques pulvérulents non enduits, de la substance active d'un additif pour peinture ou vernis de la série des polyuréthannes, préparé par réaction de polyisocyanurates, qui portent encore des groupes isocyanates libres, à base de diisocyanatotoluène, de diisocyanatohexaméthylène ou de leurs mélanges, avec (1) des esters alkyliques en $C_1$ à $C_{20}$ d'acides mono- ou polyhydroxycarboxyliques aliphatiques (degrés de polycondensation 2 à 50), (2) des polyéthylèneglycols (poids molaire 500 à 1500) et (3) des hétérocycles pentagonaux ou hexagonaux, saturés ou insaturés, qui contiennent au moins un atome d'azote dans le noyau, et qui contiennent des groupes aminoalkyles ou hydroxyalkyles en $C_1$-$C_6$, réactifs, jusqu'à ce qu'on ne puisse plus déceler de groupes isocyanates.

2. Procédé pour préparer des pigments azoïques pulvérulents, à l'exclusion du pigment orangé C.I. Pigment orange 36 (C.I. n° 11 780) ayant de meilleures propriétés rhéologiques pour servir dans des compositions pour peintures, laques et vernis à base d'alkyde/mélamine, acrylique/mélamine, acrylate/isocyanate ou polyester/isocyanate de nature traditionnelle aussi bien que de nature moderne du type des "high solids", procédé caractérisé en ce qu'on traite les pigments de base - éventuellement avant, pendant ou après le finissage - par 1 à 20 % de la substance active d'un additif pour peintures ou vernis de la série des polyuréthannes, additif préparé par réaction de polyisocyanates, qui portent encore des groupes isocyanates libres à base de diisocyanatotoluène, de diisocyanatohexaméthylène ou de leurs mélanges, avec (1) des esters alkyliques en $C_1$ à $C_{20}$ d'acides mono- ou polyhydroxycarboxyliques aliphatiques (degré de polycondensation 2 à 50), (2) des polyéthylèneglycols (poids molaire 500 à 1500) et (3) des hétérocycles pentagonaux ou hexagonaux, saturés ou insaturés, qui contiennent dans le noyau au moins un atome d'azote et portent encore des groupes aminoalkyles ou hydroxyalkyles en $C_1$ à $C_6$ réactifs, jusqu'à ce qu'on ne puisse plus déceler de groupes isocyanates.

3. Procédé selon la revendication 2, caractérisé en ce qu'on utilise la substance active d'un additif pour peintures ou vernis de la série des polyuréthannes dans un solvant qui n'est pas soluble dans l'eau ou qui n'est pas soluble de façon illimitée.

4. Procédé selon la revendication 3, caractérisé en ce qu'on utilise la substance active d'un additif pour peintures et vernis, de la série des polyuréthannes, en dissolution dans un alcool aliphatique comportant 4 à 6 atomes de carbone, dans un hydrocarbure aromatique, dans des hydrocarbures aromatiques halogénés, dans des hydrocarbures aromatiques nitrés, dans un ester d'acide aromatique ou dans un éther-oxyde aromatique.

5. Procédé selon la revendication 2, caractérisé en ce qu'on utilise la substance active d'un additif pour peintures ou vernis, de la série des polyuréthannes, en dissolution dans un solvant organique qui est au moins partiellement miscible à l'eau.

6. Procédé selon la revendication 5, caractérisé en ce qu'on utilise la substance active d'un additif pour peintures ou vernis, de la série des polyuréthannes, en dissolution dans de l'éthanol, du propanol, de l'éthylèneglycol, du diéthylèneglycol, du propylèneglycol, un éther monoalkylique en $C_1$ à $C_6$ de glycol, un éther monoalkylique en $C_1$ à $C_4$ de diglycol, un éther diméthylique de diglycol, l'acétate d'éthyl-glycol, l'acétate de méthyl-glycol, l'acétate de butyl-diglycol, l'acétone, la méthyl-éthyl-cétone, la méthyl-isobutyl-cétone, le diacétone-alcool, l'acide formique, l'acide acétique, l'acide propionique, le diméthylformamide ou la N-méthylpyrrolidone.

7. Procédé selon la revendication 2, caractérisé en ce qu'on utilise une substance active, faiblement basique, d'un additif pour peintures ou vernis, de la série des polyuréthannes, en solution aqueuse diluée, faiblement acide, avantageusement acidifiée par de l'acide acétique.

8. Utilisation des pigments azoïques pulvérulents, décrits à la revendication 1, pour pigmenter des compositions pour peintures, laques et vernis.